# EUROPÄISCHE PATENTSCHRIFT

(11) **EP 1 526 765 B1**
(45) Veröffentlichungstag und Bekanntmachung des Hinweises auf die Patenterteilung: **30.03.2011**
(21) Anmeldenummer: 03740464.7
(22) Anmeldetag: 16.07.2003
(51) Int. Cl.: A01C 7/04, A01C 15/00, A01B 73/06

(54) **SÄMASCHINE**
SOWING MACHINE
SEMOIR

(30) Priorität: 08.08.2002 US 214962
(43) Veröffentlichungstag der Anmeldung: 04.05.2005
(73) Patentinhaber: DEERE & COMPANY, Moline, Illinois 61265-8098 (US)
(72) Erfinder: OSTRANDER, Jeremy, Shane, Hudson, IL 61748 (US); PRATT, Ronald, Lee, Taylor Ridge, IL 61284 (US); MEYER, Bradley, John, Davenport, IA 52806 (US)
(74) Vertreter: Holst, Sönke
(86) Internationale Anmeldenummer: PCT/EP2003/007674
(87) Internationale Veröffentlichungsnummer: WO 2004/017710

(56) Entgegenhaltungen:
- US-A- 4 137 852
- US-A- 5 406 897
- US-A- 5 740 746
- US-A- 6 065 410

## Beschreibung

### Technisches Gebiet

Die Erfindung betrifft eine Sämaschine, mit einem sich quer erstreckenden, eine Längsmittelachse aufweisenden Hauptrahmen, welcher mit mehreren Pflanzeinheiten versehen ist. Jede Pflanzeinheit enthält einen Saatguthilfsbehälter zur Aufnahme von Saatgut, in welchem eine Dosiervorrichtung zur Dosierung des Saatguts enthalten ist, und weist einen Furchenöffner zur Ausbildung einer Pflanzfurche auf, in welche das durch die Dosiervorrichtung dosierte Saatgut abgelegt wird. Des Weiteren ist wenigsten ein linker und ein rechter an den Hauptrahmen montierter Saatguthauptbehälter zur Aufnahme von Saatgut enthalten, wobei der linke und der rechte Saatguthauptbehälter in Querrichtung durch einen Zwischenraum, der sich entlang der Längsmittelachse des Hauptrahmens erstreckt, voneinander getrennt angeordnet sind. Ferner ist ein pneumatischbedarfsgesteuertes Saatgutabgabesystem enthalten, welches bei Bedarf automatisch Saatgut vom wenigstens einem Saatguthauptbehälter zu den Saatguthilfsbehältern der Pflanzeinheiten leitet.

### Stand der Technik

Sämaschinen sind üblicherweise mit einem sich quer erstreckenden Hauptrahmen versehen, der sich quer erstreckende linke und rechte Erweiterungsrahmen aufweist. Der Hauptrahmen ist mit einer sich nach vorn erstreckenden Zugdeichsel zum Anhängen an einen Schlepper versehen. Quer entlang des Hauptrahmens und der Erweiterungsrahmen können Pflanzeinheiten angeordnet werden. Die Erweiterungsrahmen werden üblicherweise zusammengefaltet, um während des Transports die Breite der Sämaschine zu reduzieren. Bei einigen Sämaschinenkonfigurationen werden zur Reduzierung der Breite die Erweiterungsrahmen nach vorn, im Wesentlichen parallel zur Zugdeichsel, gefaltet. Die einzelnen Pflanzeinheiten sind üblicherweise mit Saatgutbehältern versehen, die das zu pflanzende Saatgut aufnehmen. Das Saatgut wird üblicherweise durch den Bediener nacheinander in die Saatgutbehälter der Pflanzeinheiten geladen. Einige Sämaschinen, die Pflanzeinheiten enthalten, sind mit pneumatisch-bedarfsgesteuerten Saatabgabesystemen versehen, mit denen die Saatgutbehälter der Pflanzeinheiten bei Bedarf automatisch mit Saatgut aus einem Saatguthauptbehälter aufgefüllt werden.

Pneumatisch-bedarfsgesteuerte Saatabgabesysteme leiten automatisch Saatgut von einem Saatguthauptbehälter zu mehreren einzelnen Pflanzeinheiten. Jede der einzelnen Pflanzeinheiten enthalten einen Saatguthilfsbehälter zur Aufnahme von Saatgut, eine Dosiervorrichtung zur Dosierung des Saatguts aus dem Saatguthilfsbehälter und einen Furchenöffner zur Ausformung einer Pflanzfurche, in welche dosiertes Saatgut abgelegt wird. Zur Erzeugung von Druckluft wird ein Gebläse eingesetzt, welches einen Luftstrom erzeugt, mit dem das Saatgut zu den Pflanzeinheiten befördert wird. Diese Systeme füllen die Saatguthilfsbehälter bei Bedarf automatisch wieder auf.

Pneumatisch-bedarfsgesteuerte Saatabgabesysteme weisen üblicherweise einen großen, zentralen Saatguthauptbehälter auf, der alle Saatguthilfsbehälter auf den Pflanzeinheiten mit Saatgut versorgt. Der Saatguthauptbehälter und das pneumatisch-bedarfsgesteuerte Saatabgabesystem kann auf einem Anhängewagen oder am Hauptrahmen selbst angeordnet sein.

Problematisch wirkt sich aus, dass ein großer, zentraler Saatguthauptbehälter umständlich zu handhaben ist, sich nur schwer zugänglich befüllen lässt und die Sicht für den Bediener deutlich einschränkt.

In der US 5,740,746 A wird eine Sämaschine offenbart, die einen rechten und einen linken auf dem Hauptrahmen montierten Saatguthauptbehälter aufweist. Nachteilig wirkt sich jedoch auch hier aus, dass durch die spezielle Anordnung dieser Saatguthauptbehälter, diese sich nur schwer zugänglich und umständlich befüllen lassen.

### Aufgabe der Erfindung

Die der Erfindung zu Grunde liegende Aufgabe wird darin gesehen, eine Sämaschine der eingangs genannten Art anzugeben, durch welches die vorgenannten Probleme überwunden werden.

### Beschreibung der Erfindung

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Sämaschine der eingangs genannten Art derart ausgebildet, dass der Zwischenraum mit einem Gehsteig zwischen dem linken und rechten Saatguthauptbehälter entlang der Längsmittelachse des Hauptrahmens versehen ist.

In einem bevorzugten Ausführungsbeispiel der Erfindung enthält die Sämaschine einen sich quer erstreckenden Hauptrahmen, wobei ein linker und ein rechter Saatguthauptbehälter und mehrere Pflanzeinheiten an den Hauptrahmen montiert sind. Ein bedarfsgesteuertes Saatgutabgabesystem leitet Saatgut von dem linken und rechten Saatguthauptbehälter zu den Pflanzeinheiten. Jede der Pflanzeinheiten ist mit einem Saatguthilfsbehälter versehen, der über das bedarfsgesteuerte Saatgutabgabesystem pneumatisch mit dem linken oder rechten Saatguthauptbehälter gekoppelt ist. Jede Pflanzeinheit ist außerdem mit einer Saatgutdosiervorrichtung versehen zur Dosierung des Saatguts aus den Saatguthilfsbehältern, wobei die Saatgutdosiervorrichtung das dosierte Saatgut in eine Pflanzfurche leitet, welche von einem sich vom Hauptrahmen erstreckenden Furchenöffner ausgebildet wird. Zwischen dem linken und rechten Saatguthauptbehälter ist ein sich in Längsrichtung erstreckender breiter Zwischenraum ausgebildet. In diesen Zwischenraum ist ein Gehsteig positioniert, um den Zugang für eine Bedienperson zu den Deckeln des Saatguthauptbehälter zu erleichtern und des Weiteren um einen Sichtkanal durch die Sämaschine zu schaffen.

Die Saatguthauptbehälter können mit identischen oder verschiedenen Saatgutarten beladen sein. Durch entsprechende Anordnung der Produktversorgungsleitungen des pneumatisch-bedarfsgesteuerten Saatgutabgabesystems wird gesteuert, welches Saatgut in welche Saatguthilfsbehälter gelangt. Wenn sich in beiden Saatguthauptbehältern die gleiche Saatgutart befindet, dann könnten die Produktversorgungsleitungen für den linken Saatguthauptbehälter zu den auf der linken Seite positionierten Pflanzeinheiten und die Produktversorgungsleitungen für den rechten Saatguthauptbehälter zu den auf der rechten Seite positionierten Pflanzeinheiten führen. Wenn unterschiedliche Saatgutarten in den Saatguthauptbehältern positioniert sind, dann können die linksseitigen Pflanzeinheiten eine Saatgutart und die rechtsseitigen Pflanzeinheiten eine andere Saatgutart pflanzen. Des Weiteren können auch andere Pflanzungskonfigurationen durch Neuanordnung der Produktversorgungsleitungen durchgeführt werden.

### Beschreibung der Zeichnung

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht einer erfindungsgemäßen Sämaschine in ihrer Arbeitsposition von hinten,
- Fig. 2: eine Ansicht der Sämaschine in ihrer Arbeitsposition von hinten,
- Fig. 3: eine perspektivische Ansicht der erfindungsgemäßen Sämaschine in ihrer Transportposition von hinten und
- Fig. 4: eine Ansicht der Sämaschine von der Seite.

### Detaillierte Beschreibung zur Ausführung der Erfindung

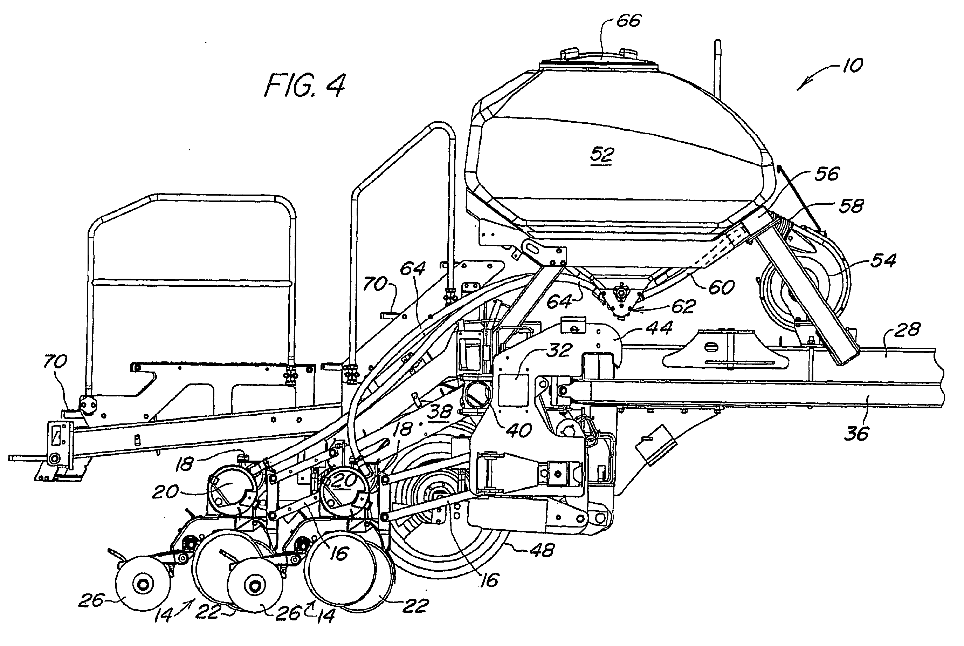

Eine landwirtschaftliche Sämaschine 10 enthält einen mittig gelegenen Hauptrahmen 12, auf dem mehrere einzelne Pflanzeinheiten 14 montiert sind. Die Pflanzeinheiten 14 sind über ein Parallelogrammgestänge 16 mit dem Hauptrahmen 12 verbunden, so dass sich die einzelnen Pflanzeinheiten 14 relativ zum Rahmen 12 bis zu einem begrenzten Maße auf und nieder bewegen können. Jede der einzelnen Pflanzeinheiten 14 (am besten dargestellt in Fig. 4) enthält einen Saatguthilfsbehälter 18 zur Aufnahme von Saatgut, eine Saatgutdosiervorrichtung 20 zur Dosierung des vom Saatguthilfsbehälter 18 aufgenommenen Saatguts und einen Furchenöffner 22 zur Ausbildung einer Saatfurche auf einem Feld zur Aufnahme des von der Saatgutdosiervorrichtung 20 dosierten Saatguts. Das Saatgut wird durch ein Saatrohr 24 von der Saatgutdosiervorrichtung 20 in die Pflanzfurche geleitet. Eine Verschließvorrichtung 26 dient zum Verschließen der das Saatgut enthaltenden Pflanzfurche. In einer bevorzugten Ausführungsform ist die Saatgutdosiervorrichtung 20 eine Vakuumsaatgutdosiervorrichtung, obwohl auch andere Arten von Saatgutdosiervorrichtungen, die mechanische Baugruppen oder Überdruck verwenden, verwendet werden könnten.

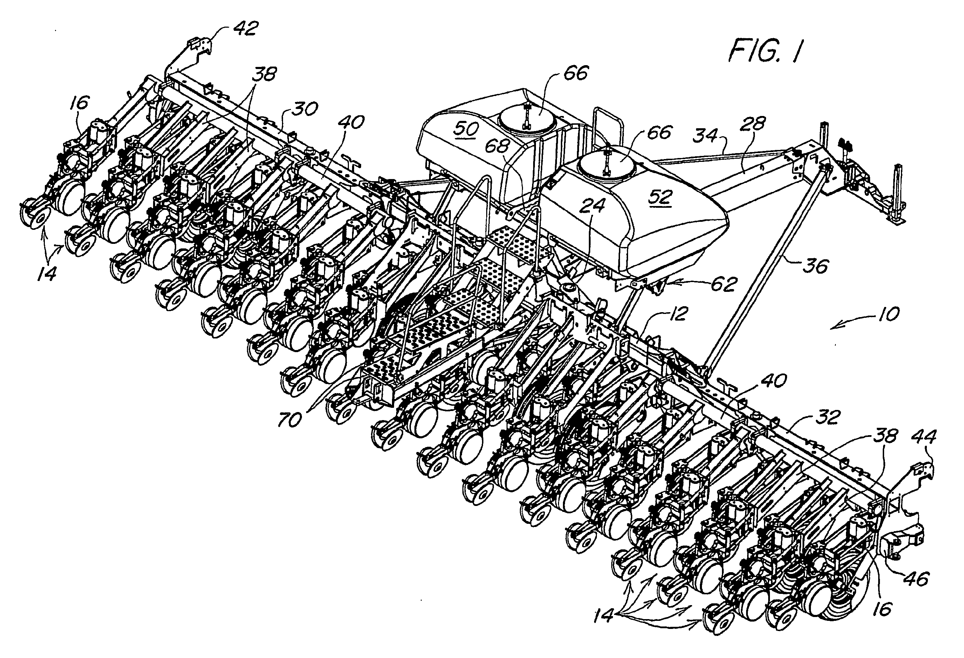

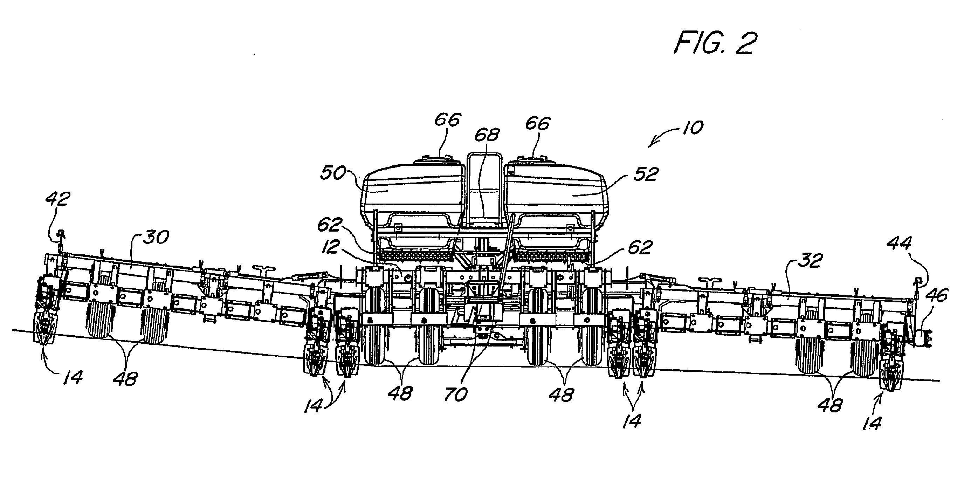

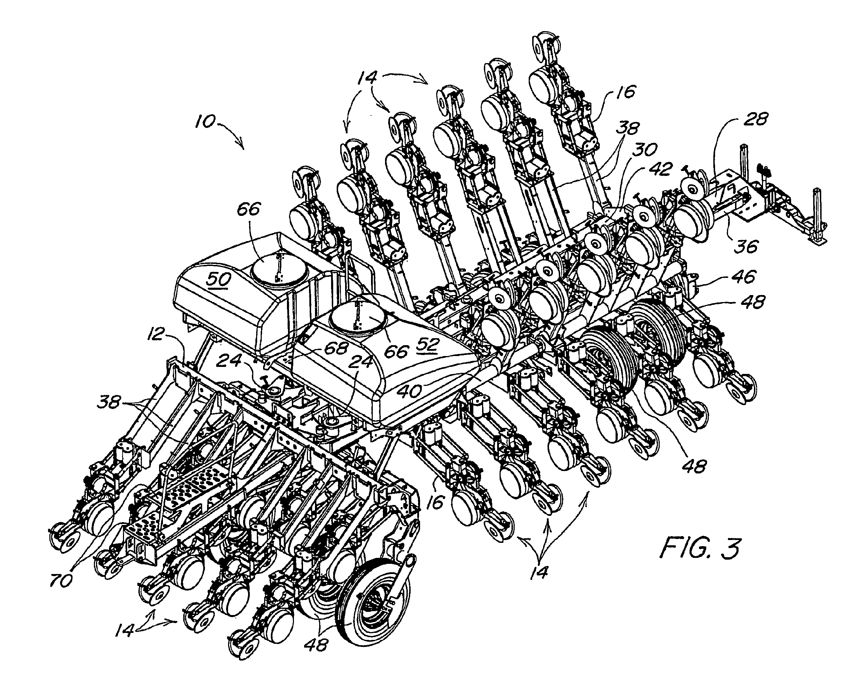

Der mittig gelegene Hauptrahmen 12 erstreckt sich quer zur Fahrtrichtung. Der Hauptrahmen 12 ist über eine teleskopierbare Zugdeichsel 28 an einen Schlepper gekoppelt. In dem dargestellten Ausführungsbeispiel definiert die Zugdeichsel die Längsmittelachse der Sämaschine 10. Die Längsmittelachse ist rechtwinklig zu dem sich quer erstreckenden Hauptrahmen 12 angeordnet. Linke und rechte Erweiterungsrahmen 30, 32 erstrecken sich quer zur Fahrtrichtung, ausgehend vom Hauptrahmen 12 nach außen, wenn die Sämaschine 10 sich in ihrer Arbeitsposition befindet, wie es in den Figuren 1 und 2 dargestellt ist. Linke und rechte Erweiterungsrahmen 30, 32 sind über linke und rechte Gestänge 34, 36 an die Zugdeichsel 28 gekoppelt. Die Erweiterungsrahmen 30, 32 sind über senkrecht ausgerichtete Drehzapfen 24 an den Hauptrahmen 12 schwenkbar gekoppelt, so dass sie in Vorwärtsrichtung in eine Transportposition für die Sämaschine 10 gefaltet werden können, wie es in Figur 3 dargestellt ist. Die Erweiterungsrahmen 30, 32 sind auch durch horizontal ausgerichtete Drehzapfen schwenkbar an den Hauptrahmen 12 gekoppelt, so dass sie der Bodenkontur besser folgen können, wie es in Figur 2 dargestellt ist. Hierbei sollte erwähnt werden, dass aus Übersichtlichkeitsgründen einige einzelne Pflanzeinheiten 14 in Figur 2 nicht dargestellt sind.

Die Pflanzeinheiten sind in zwei Reihen angeordnet. Eine vordere Reihe und eine hintere Reihe. Die einzelnen Reihenpflanzeinheiten 14 alternieren zwischen vorderer und hinterer Reihe. Die an den Hauptrahmen 12 montierten Pflanzeinheiten 14 der vorderen und hinteren Reihe sind direkt an den Hauptrahmen 12 montiert. Die hintere Reihe der an den Erweiterungsrahmen 30, 32 montierten Pflanzeinheiten 14 sind an sich nach hinten erstreckende Arme 38 montiert, welche an ein eine Schwenkwelle formendes, schwenkbares, hohlförmiges Rohr 40 gekoppelt sind. Auf diese Weise kann die hintere Reihe der an den Erweiterungsrahmen 30, 32 montierten Reihenpflanzeinheiten 14 zum Transport an ihren vorderen Enden nach oben geschwenkt werden, wie in Figur 3 dargestellt ist. Die vordere Reihe der an den Erweiterungsrahmen 30, 32 montierten Reihenpflanzeinheiten 14 ist direkt an die Erweiterungsrahmen 30, 32 montiert.

Die quer verlaufenden Enden der Erweiterungsrahmen 30, 32 sind mit linken und rechten Einhakvorrichtungen 42, 44 versehen zum Einhaken an die teleskopierbare Zugdeichsel 28, wenn sich die Sämaschine 10 in ihrer Transportposition befindet. Montagehalterungen 46 für Reihenmarkiervorrichtungen sind ebenfalls an den quer verlaufenden Enden der Erweiterungsrahmen 30, 32 vorgesehen. Die Reihenmarkiervorrichtungen 46 sind aus Übersichtlichkeitsgründen nicht dargestellt. Der Hauptrahmen 12 und die Erweiterungsrahmen 30, 32 sind mit Stützrädern 48 versehen. Die Stützräder 48 sind an Gestängen montiert, welche mit hydraulischen Zylindern versehen sind, die zum Anheben und Absenken der Pflanzeinheiten 14 relativ zum Boden ausgefahren bzw. eingefahren werden können. In der Transportposition der Sämaschine, wie in Figur 3 dargestellt, sind die sich vom Hauptrahmen 12 erstreckenden Stützräder 48 die einzigen Stützräder 48, die in Kontakt zum Boden stehen, da die sich an den Erweiterungsrahmen 30, 32 befindlichen Stützräder 48 mit den Erweiterungsrahmen 30, 32 angehoben werden.

Linke und rechte Saatguthauptbehälter 50, 52 sind an den Hauptrahmen 12 montiert. Eine Luftpumpe 54 leitet einen Druckluftstrom zu einem durch einen horizontal ausgerichteten, hohlförmigen, geschlossenen, rohrförmigen Stützträger ausgebildeten Luftverteiler 56. Die Luftpumpe 54 wird durch einen Hydraulikmotor angetrieben, wobei auch andere Motoranordnungen, wie z. B. Elektromotoren, zum Antreiben der Luftpumpe eingesetzt werden könnten. Durch einen Hauptluftschlauch 58 leitet die Luftpumpe den Druckluftstrom in den Luftverteiler 56. Der Verteiler 34 ist entsprechend der Anzahl der am Rahmen 12 und an den Erweiterungsrahmen 30, 32 enthaltenden Pflanzeinheiten 14 mit mehreren Verteilerauslassöffnungen versehen. Einzelne Luftversorgungsleitungen 60 erstrecken sich von den Verteilerauslassöffnungen und leiten Druckluft vom Luftverteiler 56 in Düsenanordnungen 62. Die Düsenanordnungen 62 sind an den Böden der linken und rechten Saatguthauptbehälter 50, 52 angeordnet. Das sich in den Saatguthauptbehältern 50, 52 befindliche Saatgut strömt durch Schwerkraft in die Düsenanordnungen 62. Die Strömungsausgangsseiten der Düsenanordnung 62 sind mit Gutversorgungsschläuchen 64 verbunden, welche sich von den Düsenanordnungen 62 zu den einzelnen Saatguthilfsbehältern 18 erstrecken, um im Luftstrom mitgeführtes Saatgut von den Düsenanordnungen 62 zu den Saatguthilfsbehältern zu leiten. Die Saatguthilfsbehälter 18 sind zum Abbau eines Überdrucks mit Belüftungsöffnungen versehen. Hierbei ist zu beachten, dass aus Darstellungsgründen die Gutversorgungsschläuche 64 nicht in den Figuren 1, 2 und 3 dargestellt sind.

Das Saatgut wird beim linken und rechten Saatguthauptbehälter 50, 52 über Deckel 66 eingeführt. Einen Zugang zu den Deckeln 66 erhält man über einen zwischen den beiden Saatguthauptbehältern 50, 52 positionierten Gehsteig 68. Der Gehsteig 68 wird über Stufen 70 erreicht, welche sich ausgehend vom Gehsteig 68 nach hinten erstrecken. Der Gehsteig 68 und die Stufen 70 sind entlang der Längsmittelachse der Sämaschine 10 angeordnet. Der Gehsteig 68 ist in einem zwischen den beiden Saatguthauptbehältern 50, 52 ausgebildeten Zwischenraum angeordnet. Neben dem einfachen Zugang zu den Deckeln 66, liefert dieser sich in Längsrichtung erstreckende Zwischenraum einen Sichtkanal für den Bediener, wenn dieser vom Schlepper aus nach hinten schaut. Die oberen Stufen 70 sind in Figur 3 aus Darstellungsgründen nicht dargestellt.

## Patentansprüche

1. Sämaschine, mit einem sich quer erstreckenden, eine Längsmittelachse aufweisenden Hauptrahmen (12), welcher mit mehreren Pflanzeinheiten (14) versehen ist, wobei jede Pflanzeinheit (14) einen Saatguthilfsbehälter (18) zur Aufnahme von Saatgut enthält, mit welchem eine Dosiervorrichtung (20) zur Dosierung des Saatguts verbunden ist, und wobei jede Pflanzeinheit (14) einen Furchenöffner (22) zur Ausbildung einer Pflanzfurche aufweist, in welche das durch die Dosiervorrichtung (20) dosierte Saatgut abgelegt wird, wenigstens einem linken und einem rechten an den Hauptrahmen (12) montierten Saatguthauptbehälter (50, 52) zur Aufnahme von Saatgut, wobei der linke und der rechte Saatguthauptbehälter (50, 52) in Querrichtung durch einen Zwischenraum, der sich entlang der Längsmittelachse des Hauptrahmens (12) erstreckt, voneinander getrennt angeordnet sind, und einem Saatgutabgabesystem, welches automatisch Saatgut von wenigstes einem Saatguthauptbehälter (50, 52) zu den Saatguthilfsbehältern (18) der Pflanzeinheiten (14) leitet, **dadurch gekennzeichnet, dass** der Zwischenraum mit einem Gehsteig (68) zwischen dem linken und rechten Saatguthauptbehälter (50, 52) entlang der Längsmittelachse des Hauptrahmens (12) versehen ist.

2. Sämaschine nach Anspruch 1, **dadurch gekennzeichnet, dass** der Hauptrahmen (12) mit einem linken und rechten Erweiterungsrahmen (30, 32) versehen ist, welche ebenfalls mit Pflanzeinheiten (14) versehen sind, wobei die Pflanzeinheiten (14) Saatguthilfsbehälter (18) aufweisen, die von einem pneumatisch-bedarfsgesteuerten Saatgutabgabesystem mit Saatgut aus dem linken und rechten Saatguthauptbehälter (50, 52) versorgt werden.

3. Sämaschine nach einem oder mehreren der vorhergehenden Ansprüche, **dadurch gekennzeichnet, dass** der linke Saatguthauptbehälter (50) die Pflanzeinheiten (14) am linken Erweiterungsrahmen (30) und der rechte Saatguthauptbehälter (52) die Pflanzeinheiten (14) am rechten Erweiterungsrahmen (32) mit Saatgut versorgt.

4. Sämaschine nach einem oder mehreren der vorhergehenden Ansprüche, dass jede Pflanzeinheit (14) am Hauptrahmen (12), am linken Erweiterungsrahmen (30) und am rechten Erweiterungsrahmen (32) über ein Gestänge an den jeweiligen Rahmen (12, 30, 32) gekoppelt ist, wobei das Gestänge ein begrenztes Heben und Senken der Pflanzeinheiten (14) relativ zum jeweiligen Rahmen (12, 30, 32) an den die Pflanzeinheit (14) montiert ist erlaubt.

5. Sämaschine nach einem oder mehreren der vorhergehenden Ansprüche, **dadurch gekennzeichnet, dass** die Sämaschine (10) eine Arbeitsstellung und eine Transportstellung aufweist und der Hauptrahmen (12) eine sich nach vorn erstreckende teleskopierbare Zugdeichsel (28) enthält, wobei in der Arbeitsstellung der linke und der rechte Erweiterungsrahmen (30, 32) sich quer nach außen vom Hauptrahmen (12) erstrecken und in der Transportstellung der linke und der rechte Erweiterungsrahmen (30, 32) sich ausgehend vom Hauptrahmen (12), im Wesentlichen parallel zur Zugdeichsel (28), nach vorn erstrecken.

6. Sämaschine nach einem oder mehreren der vorhergehenden Ansprüche, **dadurch gekennzeichnet, dass** der Hauptrahmen (12) mit Stützrädern (48) versehen ist, welche relativ zum Hauptrahmen (12) anhebbar und absenkbar sind, wobei die Stützräder (48) abgesenkt werden um die Sämaschine (10) in ihre Transportstellung anzuheben und wobei, wenn die Stützräder (48) angehoben werden, die Sämaschine (10) in ihre Arbeitsstellung abgesenkt wird.

7. Sämaschine nach einem oder mehreren der vorhergehenden Ansprüche, **dadurch gekennzeichnet, dass** der linke und der rechte Erweiterungsrahmen (30, 32) jeweils mit einem Stützrad (48) versehen ist.

8. Sämaschine nach einem oder mehreren der vorhergehenden Ansprüche, **dadurch gekennzeichnet, dass** sich vom Gehsteig (68) ausgehend nach hinten Stufen (70) erstrecken.

9. Sämaschine nach einem oder mehreren der vorhergehenden Ansprüche, **dadurch gekennzeichnet, dass** der linke und rechte Saatguthauptbehälter (50, 52) mit Deckel (66) versehen sind, welche vom Gehsteig (68) aus zugänglich sind.

10. Sämaschine nach einem oder mehreren der vorhergehenden Ansprüche, **dadurch gekennzeichnet, dass** die sich am Hauptrahmen (12) nach vorn erstreckende Zugdeichsel (28) entlang der Längsmittelachse des Hauptrahmens (12) erstreckt.

11. Sämaschine nach einem oder mehreren der vorhergehenden Ansprüche, **dadurch gekennzeichnet, dass** der linke Erweiterungsrahmen (30) mit einem linken Gestänge (34) versehen ist, welches an die teleskopierbare Zugdeichsel (28) gekoppelt ist und der rechte Erweiterungsrahmen (32) mit einem rechten Gestänge (36) versehen ist, welches an die teleskopierbare Zugdeichsel (28) gekoppelt ist.

## Claims

1. Sowing machine, having a transversely extending main frame (12) which has a longitudinal centre axis and which is provided with a plurality of planting units (14), wherein each planting unit (14) contains an auxiliary seed container (18) which has the purpose of holding seed and to which a metering device (20) for metering the seed is connected, and wherein each planting unit (14) has a furrow opener (22) for forming a plant furrow into which the seed which is metered by the metering device is deposited, at least one left-hand and one right-hand main seed container (50, 52) which is mounted on the main frame (12) and has the purpose of holding seed, wherein the left-hand and the right-hand main seed container (50, 52) are separated from one another in the lateral direction by an intermediate space which extends along the longitudinal centre axis of the main frame (12), and a seed discharge system which automatically conducts seed from at least one main seed container (50, 52) to the auxiliary seed containers (18) of the planting units (14), **characterized in that** the intermediate space is provided with a walkway (68) between the left-hand and right-hand main seed containers (50, 52) along the longitudinal centre axis of the main frame (12).

2. Sowing machine according to Claim 1, **characterized in that** the main frame (12) is provided with a left-hand and a right-hand extension frame (30, 32), which are also provided with planting units (14), wherein the planting units (14) have auxiliary seed containers (18) which are supplied with seed from the left-hand and right-hand main seed containers (50, 52) by a pneumatic demand-controlled seed discharge system.

3. Sowing machine according to one or more of the preceding claims, **characterized in that** the left-hand main seed container (50) supplies seed to the planting units (14) on the left-hand extension frame (30), and the right-hand main seed container (52) supplies seed to the planting units (14) on the right-hand extension frame (32).

4. Sowing machine according to one or more of the preceding claims, **characterized in that** each planting unit (14) on the main frame (12) is coupled to the left-hand extension frame (30) and to the right-hand extension frame (32) via a linkage to the respective frames (12, 30, 32), wherein the linkage permits limited lifting and lowering of the planting units (14) relative to the respective frame (12, 30, 32) on which the planting unit (14) is mounted.

5. Sowing machine according to one or more of the preceding claims, **characterized in that** the sowing machine (10) has a working position and a transport position, and the main frame (12) contains a telescopic tow bar (28) which extends forwards, wherein in the working position the left-hand and the right-hand extension frames (30, 32) extend transversely outward from the main frame (12), and in the transport position, the left-hand and the right-hand extension frames (30, 32) extend forwards, essentially parallel to the tow bar (28), starting from the main frame (12).

6. Sowing machine according to one or more of the preceding claims, **characterized in that** the main frame (12) is provided with support wheels (48) which can be raised and lowered relative to the main frame (12), wherein the support wheels (48) can be lowered in order to raise the sowing machine (10) into its transport position, and wherein when the support wheels (48) are raised, the sowing machine (10) is lowered into its working position.

7. Sowing machine according to one or more of the preceding claims, **characterized in that** the left-hand and the right-hand extension frames (30, 32) are each provided with a support wheel (48).

8. Sowing machine according to one or more of the preceding claims, **characterized in that** steps (70) extend rearwards from the walkway (68).

9. Sowing machine according to one or more of the preceding claims, **characterized in that** the left-hand and the right-hand main seed containers (50, 52) are provided with lids (66) which are accessible from the walkway (68).

10. Sowing machine according to one or more of the preceding claims, **characterized in that** the tow bar (28) which extends forwards on the main frame (12) extends along the longitudinal centre axis of the main frame (12).

11. Sowing machine according to one or more of the preceding claims, **characterized in that** the left-hand extension frame (30) is provided with a left-hand linkage (34) which is coupled to the telescopic tow bar (28), and the right-hand extension frame (32) is provided with a right-hand linkage (36) which is coupled to the telescopic tow bar (28).

## Revendications

1. Semoir, avec un châssis principal (12) s'étendant transversalement et présentant un axe central longitudinal, qui est équipé de plusieurs unités de plantation (14), dans lequel chaque unité de plantation (14) comporte un réservoir de graines auxiliaire (18) destiné à recevoir des graines, auquel est relié un dispositif de dosage (20) pour le dosage des graines, et dans lequel chaque unité de plantation (14) présente une roue d'ouverture de sillon (22) pour la formation d'un sillon de plantation, dans lequel les graines dosées par le dispositif de dosage (20) sont déposées, avec au moins un réservoir de graines principal gauche et un réservoir de graines principal droit (50, 52) montés sur le châssis principal (12) et destinés à recevoir des graines, dans lequel les réservoirs de graines principaux gauche et droit (50, 52) sont disposés de façon séparée l'un de l'autre dans la direction transversale par un espace intermédiaire, qui s'étend le long de l'axe central longitudinal du châssis principal (12), et avec un système de distribution de graines, qui conduit automatiquement des graines depuis au moins un réservoir de graines principal (50, 52) jusqu'aux réservoirs de graines auxiliaires (18) des unités de plantation (14), **caractérisé en ce que** l'espace intermédiaire est doté d'une passerelle (68) entre les réservoirs de graines principaux gauche et droit (50, 52) le long de l'axe central longitudinal du châssis principal (12).

2. Semoir selon la revendication 1, **caractérisé en ce que** le châssis principal (12) est pourvu d'un châssis d'extension gauche et d'un châssis d'extension droit (30, 32), qui sont également équipés d'unités de plantation (14), dans lequel les unités de plantation (14) comportent des réservoirs de graines auxiliaires (18), qui sont alimentés en graines à partir des réservoirs de graines principaux gauche et droit (50, 52) au moyen d'un système de distribution de graines à la demande à commande pneumatique.

3. Semoir selon une ou plusieurs des revendications précédentes, **caractérisé en ce que** le réservoir de graines principal gauche (50) alimente en graines les unités de plantation (14) sur le châssis d'extension gauche (30) et le réservoir de graines principal droit (52) alimente en graines les unités de plantation (14) sur le châssis d'extension droit (32).

4. Semoir selon une ou plusieurs des revendications précédentes, **caractérisé en ce que** chaque unité de plantation (14) sur le châssis principal (12), sur le châssis d'extension gauche (30) et sur le châssis d'extension droit (32) est couplée au châssis respectif (12, 30, 32) par une timonerie, dans lequel la timonerie permet un soulèvement et un abaissement limités des unités de plantation (14) par rapport au châssis respectif (12, 30, 32) sur lequel l'unité de plantation (14) est montée.

5. Semoir selon une ou plusieurs des revendications précédentes, **caractérisé en ce que** le semoir (10) présente une position de travail et une position de transport, et le châssis principal (12) comporte un timon de traction télescopique (28) s'étendant vers l'avant, dans lequel, dans la position de travail, le châssis d'extension gauche (30) et le châssis d'extension droit (32) s'étendent transversalement vers l'extérieur à partir du châssis principal (12) et, dans la position de transport, le châssis d'extension gauche (30) et le châssis d'extension droit (32) s'étendent vers l'avant, sensiblement parallèlement au timon de traction (28), à partir du châssis principal (12).

6. Semoir selon une ou plusieurs des revendications précédentes, **caractérisé en ce que** le châssis principal (12) est muni de roues d'appui (48), qui peuvent être soulevées et abaissées par rapport au châssis principal (12), dans lequel les roues d'appui (48) sont abaissées pour soulever le semoir (10) dans sa position de transport, et dans lequel, lorsque les roues d'appui (48) sont soulevées, le semoir (10) est abaissé dans sa position de travail.

7. Semoir selon une ou plusieurs des revendications précédentes, **caractérisé en ce que** les châssis d'extension gauche et droit (30, 32) sont respectivement munis d'une roue d'appui (48).

8. Semoir selon une ou plusieurs des revendications précédentes, **caractérisé en ce que** des marches d'escalier (70) s'étendent vers l'arrière à partir de la passerelle (68).

9. Semoir selon une ou plusieurs des revendications précédentes, **caractérisé en ce que** les réservoirs de graines principaux gauche et droit (50, 52) sont munis de couvercles (66), qui sont accessibles depuis la passerelle (68).

10. Semoir selon une ou plusieurs des revendications précédentes, **caractérisé en ce que** le timon de traction (28) s'étendant vers l'avant sur le châssis principal (12) s'étend le long de l'axe central longitudinal du châssis principal (12).

11. Semoir selon une ou plusieurs des revendications précédentes, **caractérisé en ce que** le châssis d'extension gauche (30) est muni d'une timonerie gauche (34), qui est couplée au timon de traction télescopique (28) et le châssis d'extension droit (32) est muni d'une timonerie droite (36), qui est couplée au timon de traction télescopique (28).
